# EUROPÄISCHE PATENTSCHRIFT

(11) **EP 2 570 682 B1**
(45) Veröffentlichungstag und Bekanntmachung des Hinweises auf die Patenterteilung: **19.08.2015**
(21) Anmeldenummer: 12405098.0
(22) Anmeldetag: 12.09.2012
(51) Int. Cl.: F16B 13/04, E04F 13/08, F16B 13/00, E04B 1/76

(54) **Bauteil-Befestigungsvorrichtung**
Component fixing device
Dispositif de fixation de composant

(30) Priorität: 13.09.2011 EP 11405326
(43) Veröffentlichungstag der Anmeldung: 20.03.2013
(73) Patentinhaber: Rogger Fasteners AG, 3257 Grossaffoltern (CH)
(72) Erfinder: Rogger, Adrian, 3250 Lyss (CH); Rogger, Marcel, 3257 Grossaffoltern (CH)
(74) Vertreter: Rüfenacht, Philipp Michael

(56) Entgegenhaltungen:
- EP-A1- 0 155 484
- EP-A1- 0 543 723
- EP-A1- 0 732 515
- EP-A1- 2 372 037
- EP-A2- 1 798 358
- DE-A1- 2 714 503
- DE-U1- 29 610 637
- US-A- 896 756
- US-A- 1 361 836
- US-A- 3 491 649
- US-A- 5 816 760

## Beschreibung

### Technisches Gebiet

Die Erfindung betrifft eine Befestigungsvorrichtung zum Befestigen eines Bauteils, insbesondere eines Dämmstoffs an einem Baukörper, umfassend einen hülsenförmigen Grundkörper mit einer in einem axial hinteren Bereich angeordneten Eintrittsöffnung für ein stiftartiges Befestigungsmittel, wobei der hülsenförmige Grundkörper in einem axial vorderen Bereich einen Dübelabschnitt zur Befestigung in einem Baukörper umfasst, sowie mindestens ein aufspreizbares Halteteil zum Halten des Bauteils umfasst.

### Stand der Technik

Die EP 2 020 469 A2 (Flörchinger) betrifft einen Haltedübel zur Fixierung von plattenförmigen Elementen an der Aussenfläche einer Wand, die aus einem schaumstoffartigen nachgiebigen Material, insbesondere aus einem Dämmstoff bestehen. Der Dübel besteht aus einem Grundkörper, in welchen eine Schraube aufgenommen ist, mit einem ersten Befestigungsabschnitt zur Fixierung in einem Bohrloch einer Wand. Hinter dem ersten Befestigungsabschnitt befindet sich ein zweiter Abschnitt mit vergrössertem Durchmesser, so dass ein Absatz zwischen erstem und zweitem Abschnitt entsteht. Der zweite Abschnitt hat die Funktion eines Abstandshalters zwischen der Wandoberfläche und einem aufspreizbaren dritten Abschnitt. Der dritte Abschnitt schliesst an den zweiten Abschnitt an und weist Schlitze im hülsenförmigen Grundkörper auf, so dass sich der Grundkörper beim Anziehen der Schraube in radialer Richtung durch den Schraubenkopf aufspreizt. Die zwischen den Schlitzen angeordneten Wandabschnitte des Grundkörpers dienen hierbei als Spreizarme. Der zweite und dritte Abschnitt des Dübels sind innerhalb des plattenförmigen Elementes angeordnet, und die Spreizarme dienen nach dem Aufspreizen als tellerförmiges Formschlusselement.

Nachteilig bei dieser Ausführungsform ist, dass im Bereich des Schraubenkopfs grosse Kräfte auf die aufspreizbaren Abschnitte wirken, womit eine Beschädigung dieser Abschnitte erfolgen kann. Weiter müssen diese Abschnitte relativ stabil ausgeführt sein, so dass diese beim Aufspreizen nicht durchgebogen werden oder sogar brechen. Schliesslich ist die Haltekraft direkt von der Steife dieser Abschnitte abhängig. Wenn ein Zug auf die Dämmstoffplatte wirkt, können die Abschnitte durchbiegen, womit sich die Dämmstoffplatte vom Mauerwerk lösen kann.

Die EP 1 691 086 A1 (fischerwerke) beschreibt einen Dämmstoffhalter zum Anbringen von Dämmstoffplatten an einem tragenden Untergrund. Der Dämmstoffhalter besteht aus einem Dübel, einer die Dämmstoffplatte durchsetzenden Halterschaft und einem daran anschliessenden Halterteller. Der Halterteller wird durch Abstützelemente gebildet, welche mit einem hinteren Ende des Halterschaftes schwenkbar verbunden sind und an ihren Stirnflächen Schneidvorrichtungen zum Einschneiden in die Dämmstoffplatte aufweisen.

Die Abstützelemente sind von einer Montagestellung (in Richtung eines vorderen Endes des Halterschaftes weisend) in eine Haltestellung (seitlich vom Halterschaft abstehend) verschwenkbar. In der Haltestellung sind die Abstützelemente an dem Untergrund zugewandten Ende aufgespreizt und dadurch in der Dämmstoffplatte verankert. Der Dämmstoffhalter kann Spreizelemente zur Zwangsspreizung des Haltetellers aufweisen und kann in die Dämmstoffplatte versenkt werden.

Die schneidenartigen Enden der Spreizelemente, welche sich während des Abspreizens in die Dämmstoffplatten schneiden, weisen den Nachteil auf, dass diese sich auch noch nach dem Abspreizen weiter in die Dämmstoffplatten einschneiden können. So besteht die Gefahr, dass z. B. durch Bewegungen, Spannungen, Druck oder auch Vibrationen der Dämmstoffplatten oder der Befestigungsvorrichtungen das um die Spreizelemente liegende Material der Dämmstoffplatten beschädigt werden, womit die Dämmstoffplatten nicht mehr optimal am Baukörper fixiert sind.

Das Dokument US 896 756 A zeigt die Merkmale des Oberbegriffs von Anspruch 1.

### Darstellung der Erfindung

Aufgabe der Erfindung ist es, eine dem eingangs genannten technischen Gebiets zugehörende Befestigungsvorrichtung zu schaffen, welche einfach aufgebaut sowie in der Handhabung und in montiertem Zustand robust ist.

Die Lösung der Aufgabe ist durch die Merkmale des Anspruchs 1 definiert. Gemäss der Erfindung ist zum Aufspreizen des mindestens einen Halteteils ein vom hülsenförmigen Grundkörper separates Spreizelement vorgesehen, welches axial relativ zum hülsenförmigen Grundkörper verfahrbar ist und mit mindestens einem schneidenartigen, in Längsrichtung verlaufenden Keilelement versehen ist, um den Halteteil beim Eintreiben des Spreizelements in die Eintrittsöffnung in der Art eines Keils radial nach aussen zu treiben.

Die erfindungsgemässe Befestigungsvorrichtung ist besonders geeignet zur Befestigung von Bauteilen an einem Baukörper, wobei der Bauteil vorzugsweise derart ausgebildet ist, dass der Bauteil durch ein nach aussen Treiben des Halteteils deformiert werden kann. Die Deformation muss dabei nicht zwingend reversibel sein. Mit dem Dübelabschnitt wird also eine Verankerung in einem Baukörper erreicht, während mit dem Halteteil ein Bauteil vorzugsweise an den Baukörper befestigt wird. Der Dübelabschnitt ist geeignet, um den Bauteil zum Beispiel in Beton, Stein, Ziegelsteinen und dergleichen zu befestigen. Der Dübelabschnitt kann je nach Anwendungsgebiet in unterschiedlichen, dem Fachmann hinreichend bekannten Ausführungsformen vorliegen.

Durch die erfindungsgemässen Merkmale wird eine besonders einfach aufgebaute und damit kostengünstige Befestigungsvorrichtung erreicht. Der Einsatz des Spreizelements hat den Vorteil, dass der Wirkungsquerschnitt des stiftartigen Befestigungsmittels vergrössert, während die Querschnittsfläche entsprechend gering gehalten werden kann. Dies wird insbesondere dadurch erreicht, dass die Keilelemente schneidenartig aufgebaut sind und damit eine besonders geringe Querschnittsfläche quer zur Längsachse aufweisen. Weiter kann durch die Ausbildung des Keils, insbesondere des Steigungsverlaufs des Keils in einer radialen Richtung nach aussen, den aufzuwendenden Kräften angepasst werden. So kann z. B. die Steigung des Keils für besonders Weiche Bauteile eher steil und für festere Bauteile eher flach ausgebildet sein.

Vorzugsweise weist das stiftartige Befestigungsmittel einen Anschlag für das Spreizelement auf, welcher insbesondere als Kopf des stiftartigen Befestigungsmittels ausgebildet ist. Dieser Kopf kann in bekannter Weise als Schrauben- oder Nagelkopf ausgebildet sein. Dem Fachmann sind dazu auch weitere Möglichkeiten bekannt.

In Varianten kann das stiftartige Befestigungsmittel auch form- und/oder kraftschlüssig mit dem Spreizelement verbunden sein. Es ist auch denkbar, dass das Spreizelement mit dem stiftartigen Befestigungsmittel einstückig ausgebildet ist.

Bevorzugt ist das stiftartige Befestigungsmittel als Schraube ausgebildet, kann aber auch als Nagel ausgebildet sein. Dem Fachmann sind allerdings auch weitere geeignete stiftartige Befestigungsmittel bekannt.

Typischerweise weist der Keil eine geradlinige Rampe auf. Dies hat den Vorteil, dass in einem Endzustand, bei abgespreiztem Halteteil in einfacher Weise erreicht werden kann, dass der Halteteil durch die gesamte Oberfläche des Keils gestützt ist. Dem Fachmann ist aber klar, dass auch andere Formen, z. B. eine in einem Querschnitt parallel zur Längsrichtung konvexe Rampe vorgesehen sein kann. Dies hat den Vorteil, dass die durch das stiftartige Befestigungsmittel aufzuwendende Kraft, insbesondere bei einer Realisierung des stiftartigen Befestigungsmittels als Schraube, konstant gehalten werden kann, da die gegen den Bauteil wirkende Fläche des Halteteils zu einem Verschwenkungswinkel desselben nicht linear zunimmt.

Die Ausbildung des Keils kann zudem als Verdrehsicherung des Spreizelements im Bauteil dienen. Damit kann eine Verdrehung des Spreizelements gegenüber dem hülsenförmigen Grundkörper unterbunden werden.

Der Bauteil weist vorzugsweise eine Konsistenz auf, welche eine mechanische Verformung erlaubt und ist dazu bevorzugt elastisch und/oder plastisch verformbar. Für die Verformung sind vorzugsweise relativ kleine Kräfte/Drücke notwendig, so dass das Bauteil z. B. schon von Hand verformt werden kann. Der Bauteil kann z. B. als Hartschaumplatte ausgebildet sein oder aus gummiartigem Basismaterial, geschäumtem Glas, Faserstoffen (z. B. Zellulose) bestehen. Die Bauteile können als Platten, Matten oder Vliesstoffe in steifer oder halbsteifer Form vorliegen.

Besonders bevorzugt handelt es sich beim Bauteil um einen oder mehreren der nachfolgenden Stoffe:
- geschäumte Kunststoffe wie Polystyrol (Styropor, XPS), Neopor oder Polyurethan, z. B. als Hartschaumplatte ausgebildet;
- geschäumte Elastomere, z. B. auf Basis von Neopren-Kautschuk, EPDM (Ethylen-Propylen-Dien-Kautschuk) oder ähnlichen gummiartigen Basismaterialien;
- anorganische Dämmstoffe wie Mineralwolle (z. B. Steinwolle oder Glaswolle);
- Naturdämmstoffe aus Nachwachsenden Rohstoffen wie Holzfaser, Holzwolle oder tierische und pflanzliche Fasern wie Schafwolle, Kokosfaser, Hanffaser, Flachsfaser, Kapok, Kork, See- und Wiesengras oder Dämmstoffe aus Recyclingmaterial wie Zellulose (z. B. Altpapier).

Dem Fachmann ist klar, dass die obig aufgeführte Liste von Isolationsmaterialien nicht abschliessend zu verstehen ist. Weiter können diese Isolationsmaterialien (und gegebenenfalls weitere Materialien) auch z. B. schichtweise kombiniert werden. Als oberste Schicht kann auch eine feste Platte vorgesehen sein, wobei für die Befestigungsvorrichtung eine Öffnung, z. B. durch Bohren, bereit gestellt werden muss.

Der Baukörper weist vorzugsweise eine hohe Festigkeit auf und kann z. B. aus Beton, Steingut (z. B. Backsteine) oder Holz bestehen.

In der Verwendung wird vorzugsweise durch den Bauteil hindurch der Baukörper so vorgebohrt, dass der hülsenförmige Grundkörper eingesetzt werden kann. Dabei kann ein vorderer Abschnitt, insbesondere ein als Dübel ausgebildeter vorderer Abschnitt des hülsenförmigen Grundkörpers in den Baukörper eindringen, während ein hinterer Teil des hülsenförmigen Grundkörpers und das Spreizelement im Bauteil zu liegen kommen. Je nach Ausführungsform kann das stiftartige Befestigungsmittel auch direkt im Baukörper form- und/oder kraftschlüssig befestigt werden. Das Keilelement schneidet beim Einführen in das Bauteil ein, womit eine Verdrehsicherung erreicht wird. Anschliessend wird das stiftartige Befestigungsmittel in den hülsenförmigen Grundkörper so eingetrieben, dass mittels des Keilelements des Spreizelements der Halteteil radial nach aussen verschwenkt wird. Dadurch wird der Bauteil am Baukörper gehalten und fixiert.

Bevorzugt steht das Keilelement radial über einen eingeklappten Halteteil über. Damit wird eine besonders geringe Querschnittsfläche der Befestigungsvorrichtung erreicht. Dies hat insbesondere den Vorteil, dass bei der Montage im Bauteil eine bezüglich eines Durchmessers relativ kleine Vorbohrung ausgeführt werden muss. In einer besonders vorteilhaften Ausbildung der Befestigungsvorrichtung reicht es aus, genau eine Bohrung durch den Bauteil und in den Baukörper vorzunehmen. Dabei muss die Vorbohrung je nach Konsistenz des Bauteils nicht zwingend den grössten Durchmesser des hülsenförmigen Grundkörpers aufweisen - es kann durchaus ausreichend sein eine kleineren Bohrdurchmesser vorzusehen, wenn der Bauteil entsprechend nachgiebig ist.

In Varianten kann das Keilelement auch nicht über den eingeklappten Halteteil überstehen. In diesem Fall würde der Halteteil bei montierter Befestigungsvorrichtung durch das Keilelement nur in einem radial inneren Bereich gestützt. Dies kann z. B. dann ausreichend sein, wenn der Bauteil eine geringe Dichte oder Festigkeit aufweist.

Erfindungsgemäß ist der aufspreizbare Halteteil, insbesondere in eine Richtung vom axial hinteren Bereich hin zu einem axial vorderen Bereich, verschwenkbar mit dem hülsenförmigen Grundkörper verbunden. Damit wird eine besonders einfach aufgebaute Befestigungsvorrichtung erreicht, welche zudem kostengünstig in der Herstellung ist. In dieser Ausführung kontaktiert das Keilelement den Halteteil an der Innenseite und führt ihn so durch die axiale Bewegung des Spreizelements nach aussen. Falls bei eingeklapptem Halteteil das Keilelement übersteht, schneidet das Keilelement beim Einführen der Befestigungsvorrichtung durch den Bauteil in den Baukörper den Bauteil ein. Sobald aber durch das Keilelement der Halteteil radial nach aussen geführt wird, ist vorzugsweise die Schneide des Keils durch den Halteteil geschützt. Damit wird erreicht, dass auch nach der Montage, insbesondere auch bei Erschütterungen des Bauteils, die Keile den Bauteil nicht beschädigen können. Damit wird eine besonders robuste Befestigung eines Bauteils an einem Baukörper erreicht.

In Varianten kann der Halteteil auch umgekehrt, vom axial vorderen zum hinteren Bereich verschwenkbar mit dem hülsenförmigen Grundkörper verbunden sein. Dabei können der Halteteil und der hülsenförmige Grundkörper vom Verbindungsbereich an in axialer Richtung nach vorne (der Eintrittsöffnung entgegengesetzte Richtung) einen Einschnitt aufweisen, in welchen das Keilelement eingefahren wird. Das Keilelement erfasst damit das Ende des Einschnitts und treibt so den Halteteil radial nach aussen. In dieser Ausführungsform ist allerdings die Kraftwirkung zwischen Keilelement und Halteteil nicht optimal und könnte in der Anwendung verklemmen.

Der aufspreizbare Halteteil ist vorzugsweise einstückig mit dem hülsenförmigen Grundkörper verbunden und insbesondere im Bereich der Eintrittsöffnung des hülsenförmigen Grundkörpers angeordnet. Durch die Anordnung des Halteteils im Bereich der Eintrittsöffnung wird erreicht, dass die Halteteile den Bauteil vom Baukörper beabstandet halten können, so dass genügend Material zwischen dem Bauteil und dem Baukörper vorliegt. So kann eine besonders stabile Befestigung des Bauteils am Baukörper erreicht werden. Weiter wird dadurch ermöglicht, dass der Halteteil im Wesentlichen durch axiale Einschnitte am hülsenförmige Grundkörper im Bereich der Eintrittsöffnung realisiert werden kann, woraus eine konstruktiv einfache und kostengünstige Befestigungsvorrichtung resultiert. Den letztgenannten Vorteil ergibt sich auch aus der einstückigen Ausbildung des hülsenförmigen Grundkörpers.

In Varianten kann der Halteteil auch als separates Element vorliegen, so z. B. als Hülse mit axialen Einschnitten, welche zwischen dem hülsenförmige Grundkörper und dem Spreizelement angeordnet wird.

Bevorzugt umfasst der hülsenförmige Grundkörper vier umfangseitig angeordnete aufspreizbare Halteteile. Damit wird eine weitgehend optimale Verankerung im Bauteil erreicht. Die Ausbildung von vier Halteteilen hat zudem konstruktive Vorteile - der axial hintere Bereich des hülsenförmigen Grundkörpers kann damit im Wesentlichen quaderförmig, mit Durchbrechungen an den axial orientierten Kanten ausgebildet sein. Damit wird wiederum eine einfach aufgebaute und kostengünstige Befestigungsvorrichtung erreicht. Zudem kann damit das Spreizelement einen Grundkörper mit quaderförmigem Querschnitt aufweisen, welcher über die Keilelemente übersteht, so dass der überstehende Bereich schon vor der Verwendung innerhalb der vier Halteteile angeordnet und vorfixiert sein kann. So wird eine Verdrehsicherung des Spreizelements gegenüber dem hülsenförmige Grundkörper erreicht und damit die Handhabung der Befestigungsvorrichtung vereinfacht.

Dem Fachmann ist allerdings klar, dass in Varianten auch weniger oder mehr als vier umfangseitig angeordnete Halteteile vorgesehen sein können. Die obigen Vorteile können z. B. auch mit drei aufspreizbaren Halteteilen erreicht werden, wobei in diesem Fall der Grundkörper des Spreizelements prismatisch mit dreieckiger Querschnittsfläche ausgebildet würde.

Vorzugsweise weist der hülsenförmige Grundkörper zwei gegenüberliegende, axial orientierte und radial abstehende Flanken auf, welche insbesondere in einem axial vorderen Bereich des hülsenförmigen Grundkörpers als Verdrehsicherung in einem Dämmstoff ausgebildet sind. Die Flanken sind vorzugsweise, wie die Keilelemente, schneidenartig aufgebaut. So können die Schneiden mühelos in den Bauteil einschneiden. In Varianten können auch mehr als zwei, z. B. vier solcher Flanken vorgesehen sein. Die Verdrehsicherung kann aber auch anderweitig ausgebildet sein. Zum Beispiel können Widerhacken oder dergleichen am Schaft des hülsenförmigen Grundkörpers angeordnet sein. Gegebenenfalls kann auf die Verdrehsicherung auch ganz verzichtet werden, insbesondere wenn als stiftartiges Befestigungsmittel eine Schraube eingesetzt wird und vor dem Einschrauben der Schraube der hülsenförmige Grundkörper im Baukörper bereits hinreichend fixiert ist (z. B. formschlüssig oder kraftschlüssig durch kleben oder dergleichen). Anderseits kann auf die Verdrehsicherung auch verzichtet werden, wenn das stiftartige Befestigungsmittel eingeschlagen wird. In letzterem Fall könnte als stiftartiges Befestigungsmittel ein Nagel vorgesehen sein.

Bevorzugt weist das Spreizelement in einem axial hinteren Bereich einen Kragen auf, welcher als Sollbruchstelle und/oder Deformationskörper ausgebildet ist. Bevorzugt wird die Befestigungsvorrichtung in vormontiertem Zustand bereitgestellt, das heisst, das stiftartige Befestigungsmittel, zum Beispiel eine Schraube, ist bereits durch das Spreizelement hindurch geführt und im hülsenförmigen Grundkörper form- und/oder kraftschlüssig gehalten, insbesondere beim Einsatz einer Schraube geringfügig eingeschraubt. Dies ermöglicht dem Anwender einen effizienten Einsatz der Vorrichtung auf einer Baustelle. Vor der Montage der Befestigungsvorrichtung dient der Kragen vorzugsweise als Distanzhalter. Der Kragen gewährleistet, dass das Spreizelement schon vor dem Einsatz, insbesondere auch während dem Transport korrekt angeordnet bleibt.

Weiter kann über die Länge des Kragens auch die Einschraubtiefe der Schraube im hülsenförmigen Grundkörper gesteuert werden. Weiter kann bei axial länger gewählten Halteteilen der Kragen kürzer ausgeführt sein und umgekehrt.

In der Verwendung wird beim eintreiben des stiftartigen Befestigungsmittels, zum Beispiel beim Einschrauben einer Schraube, über den Kopf desselben (Schrauben-, Nagelkopf oder dergleichen) der Kragen im letzten Moment zusammengepresst, so dass dieser zerplatzt.

In Varianten können andere Mittel vorgesehen sein, welche gewährleisten, dass das Spreizelement korrekt angeordnet bleibt. Zum Beispiel könnte das Spreizelement über eine Sollbruchstelle mit dem hülsenförmigen Grundkörper verbunden sein. Die Sollbruchstelle könnte beispielsweise durch Kleben erreicht werden. So kann gegebenenfalls auf den Kragen verzichtet werden. Der hülsenförmige Grundkörper könnte damit auch einstückig mit dem Spreizelement ausgebildet sein. Schliesslich kann an dem Halteteil eine Führung für das Keilelement vorgesehen sein (siehe unten).

Vorzugsweise umfasst der Halteteil ein plattenförmiges Grundelement und an der Innenseite bezüglich einer Längsachse eine Nut als Führung für das Keilelement. Mit der Nut als Führung für das Keilelement wird eine robustere Befestigungsvorrichtung erreicht. Durch die Führung kann gewährleistet werden, dass der Halteteil durch das Einfahren des Keilelements auch wirklich radial nach aussen geführt wird. Die Nut-Führung dient damit als Verdrehsicherung des Spreizelements gegenüber dem hülsenförmigen Grundkörper.

Die Verdrehsicherung könnte auch durch den quaderförmigen Grundkörper des Spreizelements gebildet sein, indem die Keilelemente auf dem Grundkörper nach hinten zurückversetzt werden und der vordere Abschnitt des Grundkörpers im hülsenförmigen Grundkörper geführt wird. Damit kann auf die Nut auch verzichtet werden.

Bevorzugt ist die Nut zwischen zwei, mit dem plattenförmigen Grundelement des Halteteils verbundenen Leisten gebildet, welche insbesondere über das plattenförmige Grundelement überstehen, wobei die Leisten vorzugsweise als Führung für das Keilelement ausgebildet sind. Diese Realisation der Nut hat den Vorteil, dass der Halteteil dadurch an Steifigkeit gewinnt. Dadurch, dass die Leisten über das Grundelement über stehen, wird erreicht, dass das Spreizelement schon vor der Montage korrekt orientiert im hülsenförmigen Grundkörper aufgenommen werden kann. Vor der Montage wird das Spreizelement derart am hülsenförmigen Grundkörper angeordnet, dass die überstehenden Bereiche der Leisten das Keilelement führen und verdrehsichern. In axialer Richtung kann das Keilelement über den Grundkörper des Spreizelements durch den Kopf des stiftartigen Befestigungsmittels gehalten werden. Auf den obig erwähnten Kragen des Spreizelements kann in diesem Fall auch verzichtet werden.

In Varianten kann statt der Leisten auch das Halteteil länger ausgebildet sein und in einem Endbereich desselben einen axialen Schlitz als Führung für die Keilelemente aufweisen. Schliesslich kann auf die über das Grundelement der Halteteile überstehenden Bereiche der Leisten auch verzichtet werden.

Vorzugsweise schliessen die überstehenden Bereiche der beiden Leisten einen V-förmigen Bereich ein. Das Keilelement kann durch die V-förmige Anordnung in die Nut besonders einfach eingeschleust werden. Dies hat den Vorteil, dass beim Zusammenführen des Spreizelements mit dem hülsenförmigen Grundkörper das Keilelement weniger präzise in Richtung der Nut geführt werden muss und dennoch korrekt platziert wird. Damit kann die Befestigungsvorrichtung effizienter vorbereitet und eingesetzt werden.

In Varianten kann auf die V-förmige Anordnung der überstehenden Bereiche der Leisten auch verzichtet werden.

Der hülsenförmige Grundkörper umfasst bevorzugt einen Anschlag als axiale Wegbegrenzung für das Spreizelement. Bevorzugt ist dieser Anschlag als Verjüngung eines Innendurchmessers im hülsenförmigen Grundkörper ausgebildet. Damit wird eine besonders robuste Befestigungsvorrichtung erreicht. Der Anwender bemerkt damit sofort, wann das stiftartige Befestigungsmittel vollständig im hülsenförmigen Grundkörper aufgenommen ist und die Halteteile entsprechend vollständig radial nach aussen geführt sind. Dies ist von Vorteil, da der Anwender nicht direkt am Befestigungsmittel visuell überprüfen kann, ob das stiftartige Befestigungsmittelvollständig eingetrieben ist.

In Varianten kann auf den Anschlag auch verzichtet werden, insbesondere wenn die Montage des Befestigungsmittels anderweitig kontrolliert wird. Insbesondere wenn eine Schraube eingesetzt wird kann zusätzlich oder alternativ zum Anschlag ein Stellring oder Markierungen an einem Schlüssel (Inbusschlüssel oder dergleichen) vorgesehen sein, welche eine visuelle Kontrolle der Montage des Befestigungsmittels erlauben.

Vorzugsweise umfasst das Spreizelement zwei Keilelemente, welche mit den Flanken des hülsenförmigen Grundkörpers fluchten. Damit können durch die im Bauteil, durch die Flanken gebildeten Schlitze auch die beiden Keilelemente geführt werden, so dass keine zusätzlichen Schlitze gebildet werden müssen. Dies hat den Vorteil, dass der Bauteil weniger verletzt wird. In der Ausführungsform mit einem vier Keilelemente umfassenden Spreizelement werden so genau vier Schlitze im Bauteil gebildet. Damit kann der hülsenförmige Grundkörper grundsätzlich, ohne mehr Schlitze in Kauf nehmen zu müssen, auch vier Flanken aufweisen, welche jeweils mit einem Keilelement fluchten.

In Varianten kann auf die fluchtende Anordnung der Flanken mit den beiden Keilelementen auch verzichtet werden, wobei in Kauf genommen würde, dass mehr Schlitze gebildet werden.

Vorzugsweise umfasst der hülsenförmige Grundkörper eine Deformationszone (oder Knautschzone). Damit ist der hülsenförmige Grundkörper in einer bevorzugten Ausführungsform nicht eigensteif ausgebildet. Die Deformationszone dient bevorzugt als Puffer für die Länge der Befestigungsvorrichtung. Dies ist von besonderem Vorteil, wenn zum Beispiel der Bauteil relativ zum Baukörper Spiel hat und nachgezogen werden soll oder wenn der Anpressdruck erhöht werden soll. Vorzugsweise wird die Deformationszone während dem Eintreiben des stiftartigen Befestigungsmittels, insbesondere bevor die Halteteile vollständig ausgeschwenkt sind, durch einen Bereich des stiftartigen Befestigungsmittels so gestützt, dass eine Deformation der Deformationszone verhindert werden kann. Erst nachdem die Halteteile vollständig ausgeschwenkt sind wird die Deformationszone durch den Bereich des stiftartigen Befestigungsmittels freigegeben. Damit wird erreicht, dass die Deformationszone sich nicht frühzeitig deformiert. In einer bevorzugten Ausführungsform ist das stiftartige Befestigungsmittel als Schraube ausgebildet und der Bereich des stiftartigen Befestigungsmittels ist als Gewindeteil realisiert. Damit wird die Deformationszone während dem Einschrauben der Schraube durch den Gewindeteil vorerst gestützt. Sobald die Halteteile vollständig ausgeschwenkt sind, wird die Deformationszone durch den Gewindeteil, insbesondere durch einen sich dem Gewinde anschliessenden gewindefreien Schaft der Schraube freigegeben.

In Varianten kann auf die Deformationszone auch verzichtet werden, insbesondere wenn die Befestigungsvorrichtung unter hinreichender Präzision eingesetzt wird.

Vorzugsweise umfasst der hülsenförmige Grundkörper mindestens ein lösbares Haltemittel zum Halten des Spreizelements. Das Haltemittel dient dazu, das Spreizelement während eines Transportes und während des Einführen der Befestigungsvorrichtung durch das Bauteil in den Baukörper an Ort zu halten, insbesondere gegenüber einer Verdrehung des Spreizelements, so dass beim Eintreiben des Befestigungsmittels das Keilelement den Halteteil in jedem Fall erfasst. Weiter kann damit gegebenenfalls auf den Kragen am Spreizelement verzichtet werden.

Durch die Möglichkeit, variable Dübelabschnittslängen vorzusehen, kann die Verankerungstiefe der jeweiligen Anwendung angepasst werden. Zum Beispiel kann eine solche Ausführungsform bei einer nachträglichen Isolierung einer Gebäudehülle, welche bereits einen Fassadenverputz umfasst, eingesetzt werden. Für diese Anwendung kann der Dübelabschnitt um eine Fassadenverputzdicke verlängert werden, da der Dübelabschnitt im Verputz typischerweise zu wenig solide befestigt werden kann. Weiter kann die Dübelabschnittlänge auch für eine Anwendung in Lochsteinen, bei grossen Hohlräumen etc. eingesetzt werden. Dadurch, dass der Dübelabschnitt nun länger ausgebildet ist, wird auch die Eindringtiefe des Befestigungsmittels vergrössert, während der notwendige Vorschubweg des Spreizelements gleich bleibt. Damit wird das Spreizelement vor der Verwendung nicht durch den Kopf des Befestigungsmittels an Ort gehalten.

Die Schaftlänge zwischen dem Dübelabschnitt und dem Halteteil kann dabei der Dicke der aufzubringenden Isolation angepasst sein. Bei einer nachträglichen Isolation wird typischerweise eine weniger dicke Isolation montiert, da diese Gebäude ja bereits einen gewissen Isolationswert aufweisen. Die Schaftlänge kann der Dicke des zu befestigenden Bauteils, zum Beispiel einer Isolationsdicke, angepasst sein. Auf das Haltemittel kann auch verzichtet werden, insbesondere wenn die Eindringtiefe des Befestigungsmittels in den Dübelabschnitt in etwa mit dem während des nach aussen Treiben des Halteteils zurückgelegten Weges des Spreizelements übereinstimmt. In diesem Fall kann nämlich eine Verdrehsicherung durch innwändig am Halteteil angebrachte Führung für das Keilelement erreicht werden, während die axiale Fixierung durch ein geringfügiges Eintreiben des Befestigungsmittels in den Dübelabschnitt erreicht wird. Weiter kann auch der sich dem Dübelabschnitt anschliessende Schaftabschnitt mit einem kleineren Querschnitt versehen sein, so dass die Befestigungsvorrichtung mit dem Dübelabschnitt und einem Teil des Schaftabschnitts in den Baukörper eingetrieben werden kann.

In Varianten kann der Kragen des Spreizelements, welcher sich beim Eintreiben des Befestigungsmittels deformieren kann oder an einer Sollbruchstelle brechen kann, entsprechend verlängert werden.

Vorzugsweise ist das lösbare Haltemittel als Rasthaken, insbesondere als ein ein Keilelement hintergreifender Rasthaken ausgebildet. Ein Rasthaken ist eine besonders einfach auszubildende Realisierung eines lösbaren Haltemittels. Insbesondere kann damit das Spreizelement getrennt von den anderen Teilen der Befestigungsvorrichtung hergestellt werden. Besonders bevorzugt ist der Rasthaken U-förmig ausgebildet, so dass dieser das Keilelement teilweise umgreifen kann. Damit wird einerseits das Spreizelement während dem Hineinstossen in die Bohrung an Ort gehalten und anderseits zusätzlich eine Verdrehsicherung gewährleistet. Die Verdrehsicherung kann aber auch ausschliesslich durch die Nut im Halteteil erreicht werden, das heisst, je nach Ausführung der Befestigungsvorrichtung kann es ausreichen, wenn der Rasthacken lediglich L-förmig ausgebildet ist. In Varianten kann statt eines Rasthakens das Spreizelement auch mit einem weiteren Teil der Befestigungsvorrichtung, zum Beispiel über eine Sollbruchstelle verbunden werden.

Vorzugsweise ist das Haltemittel an einem Halteteil ausgebildet. Diese Ausbildung ist besonders vorteilhaft, da der Halteteil typischerweise das proximal Ende des hülsenförmigen Grundkörpers bildet. Damit steht der Halteteil dem Spreizelement am nächsten. Damit wird ein einfacher und kompakter Aufbau der Befestigungsvorrichtung erreicht. In Varianten kann das Haltemittel auch am hülsenförmigen Grundkörper ausgebildet sein.

Bevorzugt ist das Haltemittel in einer Verlängerung einer Leiste des Halteteils ausgebildet. Die Leiste der Nut des Halteteils kann damit eine Doppelfunktion übernehmen, so dass kaum zusätzliches Material für das Haltemittel verwendet werden muss. Bei einer Ausführungsform mit vier Halteteilen, welche jeweils zwei eine Nut bildende Leisten für das Keilelement umfassen, können zum Beispiel jeweils eine der beiden Leisten eines, oder zweier gegenüberliegender Haltelemente zu einem Haltemittel verlängert sein. In Varianten kann das Haltemittel am Halteteil auch nicht an einer Leiste ausgebildet sein. Vorzugsweise bestehen der hülsenförmige Grundkörper und das Spreizelement jeweils aus einem Kunststoff (z. B. Polyamid), wobei je nach Anwendungsgebiet auch andere Materialien, z. B. Metalle vorgesehen sein können.

Vorzugsweise erfolgt die Herstellung des hülsenförmigen Grundkörpers und des Spreizelements durch Spritzgiessen. Dem Fachmann sind allerdings auch andere geeignete Herstellungsmethoden für den hülsenförmigen Grundkörper und das Spreizelement bekannt.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Schrägansicht einer Schraube und der Befestigungsvorrichtung, umfassend den hülsenförmigen Grundkörper mit dem Dübelabschnitt und das Spreizelement;
- Fig. 2a: eine Draufsicht auf die Befestigungsvorrichtung mit einer Schraube gemäss Figur 1;
- Fig. 2b: einen Schnitt durch die Befestigungsvorrichtung und die Schraube der Figur 2a;
- Fig. 2c: einen Schnitt durch die Befestigungsvorrichtung und die Schraube der Figur 2a, bei um 90° um die Längsachse gedrehter Befestigungsvorrichtung und Schraube;
- Fig. 3a: eine Schnittdarstellung gemäss Figur 2c der Befestigungsvorrichtung mit Schraube, vor der Verwendung;
- Fig. 3b: eine Schnittdarstellung gemäss Figur 3a, bei teilweise eingeschraubter Schraube;
- Fig. 3c: eine Schnittdarstellung gemäss Figur 3a, bei vollständig eingeschraubter Schraube;
- Fig. 4a: eine Schnittdarstellung gemäss Figur 3c der Befestigungsvorrichtung mit Schraube, ohne Dübelabschnitt;
- Fig. 4b: eine Schnittdarstellung gemäss Figur 4a, bei teilweise eingeschraubter Schraube;
- Fig. 4c: eine Schnittdarstellung gemäss Figur 4a, bei vollständig eingeschraubter Schraube;
- Fig. 5a: eine Draufsicht auf eine weitere Ausführungsform einer Befestigungsvorrichtung mit einer Schraube;
- Fig. 5b: einen Schnitt durch die Befestigungsvorrichtung und die Schraube der Figur 5a;
- Fig. 5c: einen Schnitt durch die Befestigungsvorrichtung und die Schraube der Figur 5a, bei um 90° um die Längsachse gedrehter Befestigungsvorrichtung und Schraube.

Grundsätzlich sind in den Figuren gleiche Teile mit gleichen Bezugszeichen versehen.

### Wege zur Ausführung der Erfindung

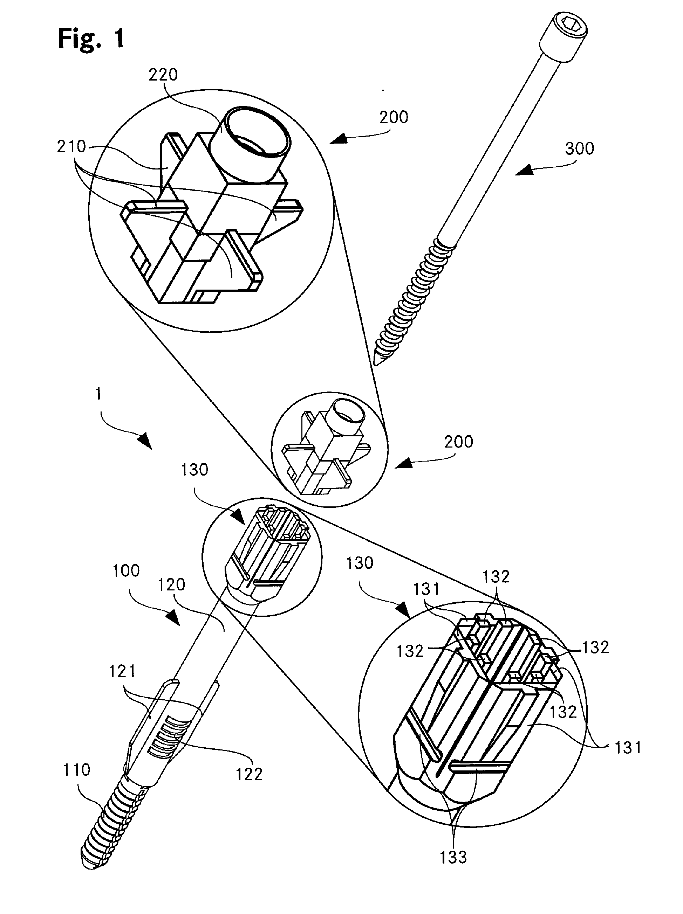

Die Figur 1 zeigt eine erste Ausführungsform einer Befestigungsvorrichtung 1 mit einem hülsenförmigen Grundkörper 100, umfassend einen Dübelabschnitt 110, einem Spreizelement 200 und einer Schraube 300 als Schrägansicht. Dabei sind das Spreizelement 200 und der hintere Abschnitt 130 des hülsenförmigen Grundkörpers 100 zur besseren Illustration besonders hervorgehoben.

Der hülsenförmige Grundkörper 100 weist axial hintereinander im Wesentlichen drei Abschnitte auf, nämlich ein vorderer Dübelabschnitt 110, ein mittlerer Abschnitt 120 und ein hinterer Abschnitt 130, welche einstückig miteinander verbunden sind.

Ein erster, axial vorderer Abschnitt 110 dient zum Verankern der Befestigungsvorrichtung 1 in einem Baukörper (nicht dargestellt), insbesondere in einem Mauerwerk aus Stein, Beton oder Holz. Dieser weist aussenseitig Querrillen und zwei gegenüberliegende Längsschlitze auf, so dass bei eingeschraubter Schraube 300 eine radiale Ausdehnung ermöglicht wird, womit der vordere Abschnitt form- und kraftschlüssig in einem Bohrloch des Baukörpers gehalten werden kann.

An den vorderen Abschnitt 110 schliesst sich ein mittlerer Abschnitt 120 an, welcher in montiertem Zustand innerhalb des Bauteils (nicht dargestellt) zu liegen kommt. Dieser mittlere Abschnitt 120 weist zwei radial abstehende und axial orientierte Flanken 121 als Verdrehsicherung im Bauteil auf. In einem axial unteren Bereich weist der mittlere Abschnitt 120 an der Aussenseite zwischen den Flanken 121 eine Rillenform auf, welche als Deformationszone 122 dient (siehe dazu weiter unten). Der Durchmesser des mittleren Abschnitts 120 ist geringfügig grösser als derjenige des vorderen Abschnitts 110.

An den mittleren Abschnitt 120 schliesst sich ein hinterer Abschnitt 130 an, welcher im Wesentlichen quaderförmig ausgebildet ist. Dieser hintere Abschnitt 130 umfasst vier paarweise gegenüberliegende Halteteile 131 auf, welche zusammen die Seitenflächen des Quaders bilden. Die Halteteile 131 weisen im Wesentlichen die Form einer rechteckigen Platte auf. Radial nach aussen und axial orientiert umfassen diese eine Leiste, welche als Verstärkung dient. An deren Innenseite umfassen die Halteteile 131 jeweils zwei zueinander beabstandete Leisten 132, wobei zwischen den Leistenpaaren eine Nut gebildet ist, die als Führung für die Keilelemente 210 dienen (siehe unten). Die Halteteile 131 sind jeweils um eine zur axialen Längsrichtung rechtwinklig orientierte Achse verschwenkbar ausgebildet. Dazu weist der vordere Abschnitt 130 in diesen Bereichen eine Materialverjüngung auf.

Das Spreizelement 200 umfasst einen im Wesentlichen quaderförmigen Grundkörper mit einer axialen Bohrung für die Schraube 300. Im Bereich des Eintritts der Schraube umfasst das Spreizelement 200 weiter einen Kragen 220. Dieser dient als Distanzhalter vor der Montage. Schliesslich umfasst das Spreizelement an den Seitenflächen jeweils ein radial und axial orientiertes Keilelement 210, welche so ausgebildet sind, dass sie durch die Nut zwischen jeweils zwei Leisten 132 eines Halteteils 131 geführt werden können.

Die Schraube 300 umfasst einen Schraubenkopf mit Innensechskant, einen sich dem Schraubenkopf anschliessenden kreiszylindrischen Schaft und einen sich dem Schaft anschliessenden Gewindeteil.

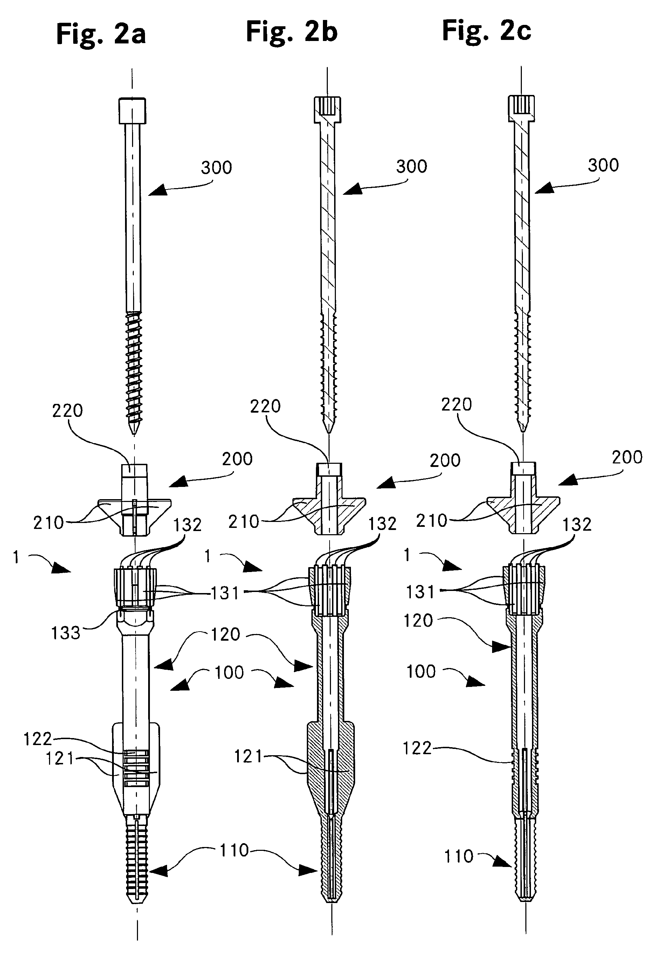

Die Figur 2a zeigt eine Draufsicht auf die Befestigungsvorrichtung 1 mit einer Schraube 300 gemäss der Figur 1. Die Figuren 2b und 2c zeigen jeweils einen Schnitt durch die Befestigungsvorrichtung 1 mit einer Schraube 300 gemäss der Figur 1, wobei die Darstellung gemäss Figur 2c zu derjenigen der Figur 2b um 90° um die Längsachse gedreht ist. In den Figuren 2b und 2c ist insbesondere ersichtlich, dass der hülsenförmige Grundkörper 100 im vorderen Dübelabschnitt 110 geschlitzt ist und die Schlitze bezüglich der Flanken 121 um 90° versetzt sind. Im unteren Bereich des mittleren Abschnitts 120 ist zudem eine Verjüngung des Innendurchmessers ersichtlich. In diesem Bereich greift das Gewinde der Schraube ein. Weiter ist ersichtlich, dass unterhalb der Verjüngungen der Halteteile 131 ein Absatz ausgebildet ist, welcher zur axialen Wegbegrenzung des Spreizelements dient.

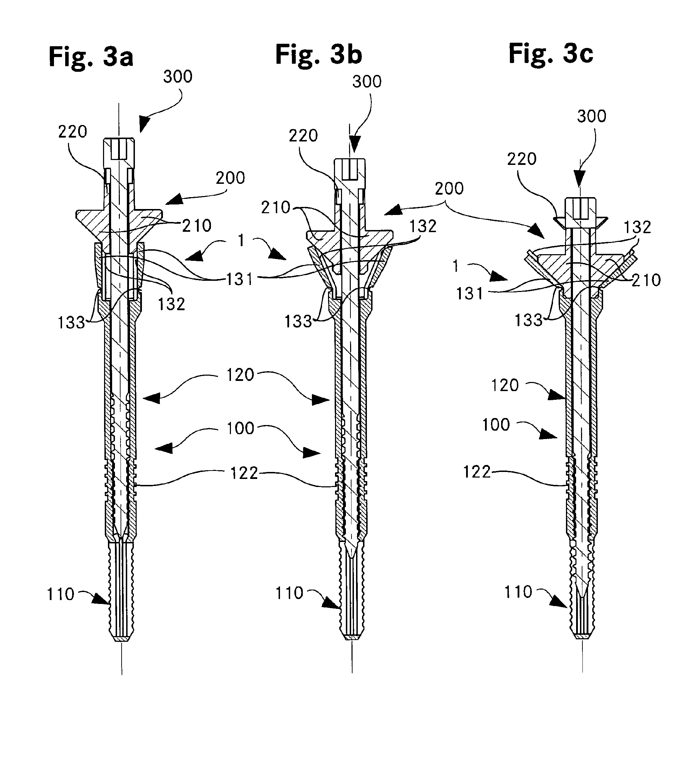

Die Figuren 3a bis 3c zeigen die Befestigungsvorrichtung 1 mit der Schraube 300 vor respektive in der Verwendung als Querschnittsdarstellung.

Figur 3a zeigt die Befestigungsvorrichtung 1 mit der Schraube 300 wie sie an den Anwender geliefert wird. Die Schraube 300 führt durch das Spreizelement 200 hindurch in den hülsenförmigen Grundkörper 100. Die Schraube 300 greift mit dem Schraubengewinde in den unteren Bereich des mittleren Abschnitts 120 des hülsenförmigen Grundkörpers 100 ein, so dass die Schraube axial fixiert ist. Damit ist das Spreizelement 200 zwischen dem Schraubenkopf der Schraube 300 und den Halteteilen 131 des hülsenförmigen Grundkörpers 100 axial fixiert. Dabei ist ersichtlich, dass der Kragen 220 als Distanzhalter die axiale Fixierung ermöglicht. Ein unterer Bereich des quaderförmigen Grundelements des Spreizelements 200 ist in diesem Zustand bereits zwischen den Halteteilen 131 platziert und die axial hinteren Kanten der Halteteile 131 kontaktieren bereits den Keilelementansatz.

In der Verwendung wird in einem ersten Schritt das Bauteil an den Baukörper angebracht. Anschliessend wird ein Loch durch den Bauteil hindurch in den Baukörper gebohrt. Die Befestigungsvorrichtung 1 wird anschliessend in das Loch geführt, wobei der Dübelabschnitt 110 in den Baukörper dringt.

Um gewährleisten zu können, dass der Dübelabschnitt 110 tatsächlich im Baukörper liegt, ist ein spezieller Schlüssel vorgesehen. Dieser Schlüssel umfasst an seinem vorderen Ende einen Sechskantkopf. Weiter ist am Schaft des Schlüssels ein Stellring vorgesehen, welcher axial fixiert werden kann. Der Stellring umfasst zwei Abschnitte, nämlich einen axial vorderen Abschnitt mit einer Querschnittsfläche, welche in etwa der Bohrung im Bauteil entspricht und einen axial hinteren Bereich, welcher eine Querschnittsfläche aufweist, die grösser ist als die Bohrung im Bauteil. Die axiale Länge des vorderen Abschnitts entspricht im Wesentlichen der Länge, um welche das Spreizelement 200 verfahren wird plus der axialen Länge des Kragens, d.h. der Einschraubtiefe der Schraube. Der Stellring wird nun vor dem Verschrauben der Befestigungsvorrichtung 1 am Schlüssel derart befestigt, dass bei eingestecktem Schlüssel in die Schraube 300 der Befestigungsvorrichtung 1 eine Distanz zwischen dem vorderen Ende des axial vorderen Teils des Stellrings bis zum axial vorderen Ende des mittleren Abschnitts 120 gerade der Dicke des Bauteils plus einem Sicherheitsabstand entspricht, so dass durch den Stellring der Bauteil nicht beschädigt wird. In der Anwendung wird also der Schlüssel bis zu einem definierten Abstand zwischen dem axial hinteren Abschnitt des Stellrings und dem Bauteil, zum Beispiel bis auf 1 cm, eingeschraubt. Falls allerdings der Bauteil hinreichend robust ist, kann der Stellring auch derart dimensioniert sein, dass der axial hintere Abschnitt als Anschlag am Bauteil dient.

Die Befestigungsvorrichtung 1 mit der Schraube 300 gemäss Figur 3a wird mit dem Schlüssel durch das Bohrloch des Bauteils hindurch in den Baukörper geführt. Wurde das Bohrloch im Baukörper getroffen, so steht der vordere Abschnitt des Stellrings unmittelbar vor dem Bohrloch des Bauteils.

In der Figur 3b ist die Schraube 300 teilweise in den hülsenförmigen Grundkörper 100 eingeschraubt. Der Schraubenkopf presst über den Kragen 220 das Spreizelement 200 zwischen die Halteteile 131, wobei die Keilelemente 210 durch die Leisten 132 geführt sind. Über die Keilelemente 210 werden die Halteteile 131 radial nach aussen geführt, während der Gewindeteil der Schraube 300 in den vorderen Dübelabschnitt 110 des hülsenförmigen Grundkörpers 100 vordringt. Bei Verwendung des obig beschriebenen Schlüssels wird während des Einschraubens der vordere Abschnitt des Stellrings in das Bohrloch des Bauteils geführt.

In der Figur 3c ist die Befestigungsvorrichtung 1 mit der Schraube 300 in montiertem Zustand dargestellt. Die Schraube 300 ist gut zur Hälfte im vorderen Dübelabschnitt 110 des hülsenförmigen Grundkörpers 100 angelangt. Die Halteteile 131 sind vollständig radial nach aussen verschwenkt, wobei die Halteteile 131 über die gesamte Länge der Keilelemente 210 gestützt sind. Das Spreizelement 200 liegt derweilen an der axialen Begrenzung (Verjüngung) des hülsenförmigen Grundkörpers 100 an. In diesem Zustand ist auch der Kragen deformiert. Bei Verwendung des obig beschriebenen Schlüssels weist der zweite Abschnitt des Stellrings nach Abschluss des Einschraubens einen geringen Abstand zur Oberfläche des Bauteils auf.

Insbesondere falls der Bauteil am Baukörper Spiel hat oder mit erhöhtem Druck an den Baukörper geschraubt werden soll, kann die Schraube 300 gemäss Figur 3c noch weiter eingeschraubt werden. In der Figur 3c ist dazu ersichtlich, dass bei einem weiteren Einschrauben der Schraube 300 die Deformationszone 122 vom Gewindeteil der Schraube 300 freigegeben wird, womit sich die Deformationszone 122 deformieren kann.

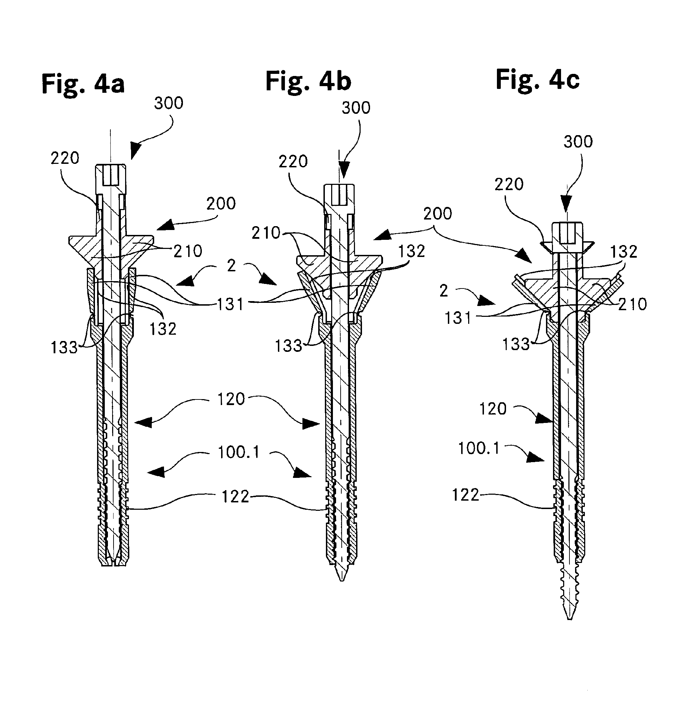

Die Figuren 4a bis 4c zeigen eine zweite Ausführungsform der Befestigungsvorrichtung 2, welche im Wesentlichen der ersten Ausführungsform gemäss den Figuren 3a bis 3c entspricht. Als einziger Unterschied umfasst der hülsenartige Grundkörper 100.1 keinen Dübelabschnitt. Damit ist diese Ausführungsform insbesondere für Baukörper aus Baumaterialien wie Holz oder dergleichen geeignet, welche nicht zwingend einen Dübel erfordern. Anderseits kann der Dübel auch separat vorgesehen sein.

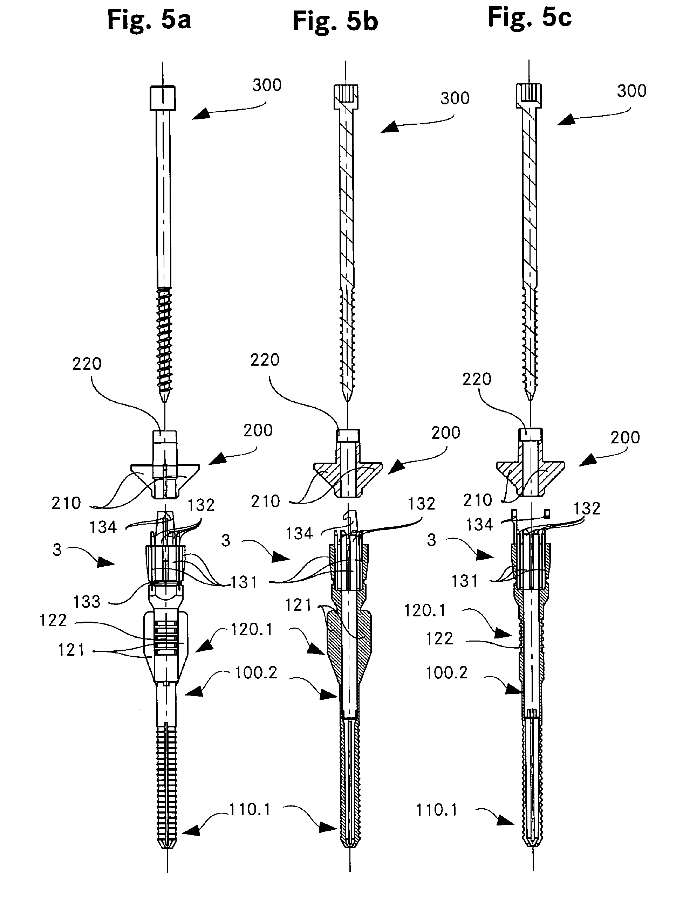

Die Figuren 5a bis 5c zeigen eine dritte Ausführungsform der Befestigungsvorrichtung 3, welche sich von der ersten Ausführungsform der Befestigungsvorrichtung 1 im hülsenförmigen Grundkörper 100.2 unterschiedet. So ist der Dübelabschnitt 110.1 verlängert und der mittlere Abschnitt 121 ist gegenüber dem mittleren Abschnitt 120 der ersten Ausführungsform 1 verkürzt. Die Befestigungsvorrichtung 3 ist damit insbesondere für Isolationselemente für Renovationen geeignet, da durch den mittleren Abschnitt 120.1 dünnere Isolationselemente befestigt werden können, und da mit dem längeren Dübelabschnitt 110.1 die Befestigungsvorrichtung 3 durch einen Verputz hindurch in einem Mauerwerk verankert werden kann.

Da bei der Befestigungsvorrichtung 3 aber bei verlängertem Dübelabschnitt 110.1 auch die Eindringtiefe der Schraube 300 verlängert wird, weist vor der Verwendung der Befestigungsvorrichtung 3 der Schraubenkopf einen Abstand zum Kragen 220 des Spreizelements 200 auf, so dass das Spreizelement 200 nicht an Ort gehalten werden kann. Aus diesem Grund umfassen zwei gegenüberliegende Halteteile 131 an einer der beiden Leisten 132 jeweils einen Rasthaken 134, welcher vorliegend U-förmig ausgebildet ist und rückseitig eine Abschrägung aufweist. Durch die U-Form des Rasthakens 134 wird zusätzlich zur Sicherung in Längsrichtung auch eine Verdrehsicherung erreicht. Bei der Vormontage der Befestigungsvorrichtung 3 kann damit das Spreizelement 200 einfach in Richtung der Eintrittsöffnung der Schraube 300 eingerastet werden. In einer weiteren Ausführungsform kann der Rasthaken 134 auch L-förmig ausgebildet sein.

Die Schraube 300 muss nicht zwingend als Innensechskantschraube ausgebildet sein. Es wären auch Aussensechskant-, Kreuzschlitz-, Schlitz-, Torx- und weitere dem Fachmann bekannte Schraubentypen für diesen Einsatz denkbar.

Die Keilelemente können auch andere als in den Figuren dargestellte Formen aufweisen. Insbesondere können sie axial länger ausgebildet sein und damit die Form eines Trapezes mit einem rechten Winkel aufweisen.

Die Überstehenden Bereiche der Leisten 132 können auch länger ausgebildet sein, so dass die Führung der Keilelemente 210 optimiert werden kann.

Auf den Kragen 220 kann auch verzichtet werden, insbesondere wenn die Ausbildung der überstehenden Bereiche der Leisten 132 so gross sind, so dass das Spreizelement 200 durch dieselben hinreichend geführt ist.

Der Dübelabschnitt 110 ist nicht auf die in den Figuren dargestellte Ausführungsform beschränkt - dieser kann im Sinne herkömmlicher Dübel ausgebildet sein. Insbesondere kann der vordere Abschnitt 110 des hülsenförmigen Grundkörper 100 auch in bekannter Weise Widerhacken aufweisen.

Zusammenfassend ist festzustellen, dass erfindungsgemäss eine besonders robuste Befestigungsvorrichtung bereitgestellt wird, welche zudem aus lediglich zwei Teilen hergestellt und damit auch kostengünstig in der Herstellung ist.

## Patentansprüche

1. Befestigungsvorrichtung (1, 3) zum Befestigen eines Bauteils, insbesondere eines Dämmstoffs an einem Baukörper, umfassend einen hülsenförmigen Grundkörper (100, 100.2) mit einer in einem axial hinteren Bereich angeordneten Eintrittsöffnung für ein stiftartiges Befestigungsmittel (300), insbesondere für eine Schraube oder einen Nagel, wobei der hülsenförmige Grundkörper (100, 100.2) in einem axial vorderen Bereich einen Dübelabschnitt (110, 110.1) zur Befestigung in einem Baukörper umfasst, sowie mindestens ein aufspreizbares Halteteil (131) zum Halten des Bauteils umfasst, wobei zum Aufspreizen des mindestens einen Halteteils (131) ein vom hülsenförmigen Grundkörper (100, 100.2) separates Spreizelement (200) vorgesehen ist, welches axial relativ zum hülsenförmigen Grundkörper (100, 100.2) verfahrbar ist und mit mindestens einem schneidenartigen, in Längsrichtung verlaufenden Keilelement (210) versehen ist, um den Halteteil (131) beim Eintreiben des Spreizelements (200) in die Eintrittsöffnung in der Art eines Keils radial nach aussen zu treiben, **dadurch gekennzeichnet, dass** der aufspreizbare Halteteil (131), in eine Richtung vom axial hinteren Bereich hin zu einem axial vorderen Bereich, verschwenkbar mit dem hülsenförmigen Grundkörper (100, 100.2) verbunden ist.

2. Befestigungsvorrichtung (1, 3) nach Anspruch 1, **dadurch gekennzeichnet, dass** das Keilelement (210) radial über einen eingeklappten Halteteil (131) übersteht.

3. Befestigungsvorrichtung (1, 3) nach Anspruch 1 oder 2, **dadurch gekennzeichnet, dass** der aufspreizbare Halteteil (131) einstückig mit dem hülsenförmigen Grundkörper (100, 100.2) verbunden und insbesondere im Bereich der Eintrittsöffnung angeordnet ist.

4. Befestigungsvorrichtung (1, 3) nach einem der Ansprüche 1 bis 3, **dadurch gekennzeichnet, dass** der hülsenförmige Grundkörper (100, 100.2) vier umfangseitig angeordnete, aufspreizbare Halteteile (131) umfasst.

5. Befestigungsvorrichtung (1, 3) nach einem der Ansprüche 1 bis 4, **dadurch gekennzeichnet, dass** der hülsenförmige Grundkörper (100, 100.2) zwei gegenüberliegende, axial orientierte und radial abstehende Flanken (121) aufweist, welche insbesondere in einem axial vorderen Bereich des hülsenförmigen Grundkörpers (100, 100.2) als Verdrehsicherung in einem Dämmstoff ausgebildet sind.

6. Befestigungsvorrichtung (1, 3) nach einem der Ansprüche 1 bis 5, **dadurch gekennzeichnet, dass** das Spreizelement (200) in einem axial hinteren Bereich einen Kragen (220) aufweist, welcher als Sollbruchstelle und/oder Deformationskörper ausgebildet ist.

7. Befestigungsvorrichtung (1, 3) nach einem der Ansprüche 1 bis 6, **dadurch gekennzeichnet, dass** der Halteteil (131) ein plattenförmiges Grundelement umfasst und an der Innenseite bezüglich einer Längsachse eine Nut als Führung für das Keilelement (210) umfasst.

8. Befestigungsvorrichtung (1, 3) nach Anspruch 7, **dadurch gekennzeichnet, dass** die Nut zwischen zwei mit dem plattenförmigen Grundelement verbundenen Leisten gebildet ist, welche insbesondere über das plattenförmige Grundelement überstehen, wobei die Leisten vorzugsweise als Führung für das Keilelement (210) ausgebildet sind.

9. Befestigungsvorrichtung (1, 3) nach Anspruch 8, **dadurch gekennzeichnet, dass** die überstehenden Bereiche der beiden Leisten einen V-förmigen Bereich einschliessen,

10. Befestigungsvorrichtung (1, 3) nach einem der Ansprüche 1 bis 9, **dadurch gekennzeichnet, dass** der hülsenförmige Grundkörper (100, 100.2) einen Anschlag als axiale Wegbegrenzung für das Spreizelement (200) umfasst.

11. Befestigungsvorrichtung (1, 3) nach Anspruch 5, **dadurch gekennzeichnet, dass** das Spreizelement (200) zwei Keilelemente (210) umfasst, welche mit den Flanken (121) des hülsenförmigen Grundkörpers (100, 100.2) fluchten.

12. Befestigungsvorrichtung (1, 3) nach einem der Ansprüche 1 bis 11, **dadurch gekennzeichnet, dass** der hülsenförmige Grundkörper (100, 100.2) eine Deformationszone (122) umfasst.

13. Befestigungsvorrichtung (1, 3) nach einem der Ansprüche 1 bis 12, **dadurch gekennzeichnet, dass** der hülsenförmige Grundkörper (100, 100.2) mindestens ein lösbares Haltemittel (134) zum Halten des Spreizelement (200) umfasst.

14. Befestigungsvorrichtung (1, 3) nach Anspruch 13, **dadurch gekennzeichnet, dass** das lösbare Haltemittel als Rasthaken (134), insbesondere als ein ein Keilelement (210) hintergreifender Rasthaken (134) ausgebildet ist.

15. Befestigungsvorrichtung (1, 3) nach Anspruch 13 oder 14, **dadurch gekennzeichnet, dass** das Haltemittel (134) an einem Halteteil (131) ausgebildet ist.

16. Befestigungsvorrichtung (1, 3) nach einem der Ansprüche 13 bis 15 und nach Anspruch 9, **dadurch gekennzeichnet, dass** das Haltemittel (134) in einer Verlängerung einer Leiste (132) des Halteteils (131) ausgebildet ist.

## Claims

1. Fixing device (1, 3) for fixing a component, in particular insulating material, to a structure, comprising a sleeve-shaped basic body (100, 100.2) with an inlet opening, which is arranged in an axially rear region, for a pin-like fastening means (300), in particular for a screw or a nail, wherein the sleeve-shaped basic body (100, 100.2) comprises, in an axially front region, a dowel section (110, 110.1) for fixing in a structure, and at least one expandable holding part (131) for holding the component, wherein, in order to expand the at least one holding part (131), an expanding element (200) which is separate from the sleeve-shaped basic body (100, 100.2) is provided, said expanding element being movable axially relative to the sleeve-shaped basic body (100, 100.2) and being provided with at least one cutting-edge-like wedge element (210) running in the longitudinal direction, in order to drive the holding part (131) radially outwards in the manner of a wedge when the expanding element (200) is driven into the inlet opening, **characterized in that** the expandable holding part (131) is connected to the sleeve-shaped basic body (100, 100.2) in a manner pivotable in a direction from the axially rear end to an axially front end.

2. Fixing device (1, 3) according to Claim 1, **characterized in that** the wedge element (210) protrudes radially over a folded-in holding part (131).

3. Fixing device (1, 3) according to Claim 1 or 2, **characterized in that** the expandable holding part (131) is connected integrally to the sleeve-shaped basic body (100, 100.2) and is arranged in particular in the region of the inlet opening.

4. Fixing device (1, 3) according to one of Claims 1 to 3, **characterized in that** the sleeve-shaped basic body (100, 100.2) comprises four expandable holding parts (131) arranged circumferentially.

5. Fixing device (1, 3) according to one of Claims 1 to 4, **characterized in that** the sleeve-shaped basic body (100, 100.2) has two opposite, axially oriented and radially protruding flanks (121) which, in particular in an axially front region of the sleeve-shaped basic body (100, 100.2), are designed as anti-twist securing in insulating material.

6. Fixing device (1, 3) according to one of Claims 1 to 5, **characterized in that** the expanding element (200) has, in an axially rear region, a collar (220) which is designed as a predetermined breaking point and/or a deformation body.

7. Fixing device (1, 3) according to one of Claims I to 6, **characterized in that** the holding part (131) comprises a plate-like basic element and, on the inner side with respect to a longitudinal axis, comprises a groove as a guide for the wedge element (210).

8. Fixing device (1, 3) according to Claim 7, **characterized in that** the groove is formed between two strips which are connected to the plate-like basic element and in particular protrude over the plate-like basic element, wherein the strips are preferably designed as a guide for the wedge element (210).

9. Fixing device (1, 3) according to Claim 8, **characterized in that** the protruding regions of the two strips enclose a V-shaped region.

10. Fixing device (1, 3) according to one of Claims 1 to 9, **characterized in that** the sleeve-shaped basic body (100, 100.2) comprises a stop as an axial path delimitation for the expanding element (200).

11. Fixing device (1, 3) according to Claim 5, **characterized in that** the expanding element (200) comprises two wedge elements (210) which are aligned with the flanks (121) of the sleeve-shaped basic body (100, 100.2).

12. Fixing device (1, 3) according to one of Claims 1 to 11, **characterized in that** the sleeve-shaped basic body (100, 100.2) comprises a deformation zone (122).

13. Fixing device (1, 3) according to one of Claims 1 to 12, **characterized in that** the sleeve-shaped basic body (100, 100.2) comprises at least one releasable holding means (134) for holding the expanding element (200).

14. Fixing device (1, 3) according to Claim 13, **characterized in that** the releasable holding means is designed as a latching hook (134), in particular as a latching hook (134) which engages behind a wedge element (210).

15. Fixing device (1, 3) according to Claim 13 or 14, **characterized in that** the holding means (134) is formed on a holding part (131).

16. Fixing device (1, 3) according to one of Claims 13 to 15 and according to Claim 9, **characterized in that** the holding means (134) is formed in an extension of a strip (132) of the holding part (131).

## Revendications

1. Dispositif de fixation (1, 3) pour la fixation d'un composant, en particulier d'un matériau isolant à un élément de construction, comprenant un corps de base (100, 100.2) en forme de douille avec une ouverture d'entrée disposée dans une région axialement postérieure pour un moyen de fixation en forme de tige (300), en particulier pour une vis ou un clou, dans lequel le corps de base en forme de douille (100, 100.2) comprend dans une région axialement antérieure une partie de cheville (110, 110.1) pour la fixation dans un élément de construction, ainsi qu'au moins une partie de maintien expansible (131) pour le maintien du composant, dans lequel il est prévu pour l'expansion de ladite au moins une partie de maintien (131) un élément d'expansion (200) séparé du corps de base en forme de douille (100, 100.2), qui est déplaçable axialement par rapport au corps de base en forme de douille (100, 100.2) et qui est muni d'au moins un élément de coin de type couteau (210) s'étendant en direction longitudinale, afin de pousser la partie de maintien (131) radialement vers l'extérieur à la manière d'un coin lors de l'introduction de l'élément d'expansion (200) dans l'ouverture d'entrée, **caractérisé en ce que** la partie de maintien (131) est reliée de façon pivotante au corps de base en forme de douille (100, 100.2) dans une direction de la région axialement postérieure à une région axialement antérieure.

2. Dispositif de fixation (1, 3) selon la revendication 1, **caractérisé en ce que** l'élément de coin (210) est saillant radialement au-dessus d'une partie de maintien repliée (131).

3. Dispositif de fixation (1, 3) selon la revendication 1 ou 2, **caractérisé en ce que** la partie de maintien expansible (131) est assemblée d'un seul tenant au corps de base en forme de douille (100, 100.2) et est disposée en particulier dans la région de l'ouverture d'entrée.

4. Dispositif de fixation (1, 3) selon l'une quelconque des revendications 1 à 3, **caractérisé en ce que** le corps de base en forme de douille (100, 100.2) comprend quatre parties de maintien expansibles (131) disposées du côté du pourtour.

5. Dispositif de fixation (1, 3) selon l'une quelconque des revendications 1 à 4, **caractérisé en ce que** le corps de base en forme de douille (100, 100.2) présente deux flancs opposés (121), orientés axialement et saillants radialement, qui sont formés en particulier dans une région axialement antérieure du corps de base en forme de douille (100, 100.2) comme blocage de rotation dans un matériau isolant.

6. Dispositif de fixation (1, 3) selon l'une quelconque des revendications 1 à 5, **caractérisé en ce que** l'élément d'expansion (200) présente dans une région axialement postérieure un collet (220), qui est réalisé en forme de zone de rupture préférentielle et/ou comme corps de déformation.

7. Dispositif de fixation (1, 3) selon l'une quelconque des revendications 1 à 6, **caractérisé en ce que** la partie de maintien (131) comprend un élément de base en forme de plaque et comprend sur le côté intérieur par rapport à un axe longitudinal une rainure servant de guide pour l'élément de coin (210).

8. Dispositif de fixation (1, 3) selon la revendication 7, **caractérisé en ce que** la rainure est formée entre deux baguettes reliées à l'élément de base en forme de plaque, qui sont saillantes en particulier au-dessus de l'élément de base en forme de plaque, dans lequel les baguettes sont de préférence configurées en forme de guide pour l'élément de coin (210).

9. Dispositif de fixation (1, 3) selon la revendication 8, **caractérisé en ce que** les régions saillantes des deux baguettes forment une région en forme de V.

10. Dispositif de fixation (1, 3) selon l'une quelconque des revendications 1 à 9, **caractérisé en ce que** le corps de base en forme de douille (100, 100.2) comprend une butée comme limitation de course axiale pour l'élément d'expansion (200).

11. Dispositif de fixation (1, 3) selon la revendication 5, **caractérisé en ce que** l'élément d'expansion (200) comprend deux éléments de coin (210), qui sont alignés avec les flancs (121) du corps de base en forme de douille (100, 100.2).

12. Dispositif de fixation (1, 3) selon l'une quelconque des revendications 1 à 11, **caractérisé en ce que** le corps de base en forme de douille (100, 100.2) comprend une zone de déformation (122).

13. Dispositif de fixation (1, 3) selon l'une quelconque des revendications 1 à 12, **caractérisé en ce que** le corps de base en forme de douille (100, 100.2) comprend au moins un moyen de maintien séparable (134) pour le maintien de l'élément d'expansion (200).

14. Dispositif de fixation (1, 3) selon la revendication 13, **caractérisé en ce que** le moyen de maintien séparable (134) est configuré en forme de crochet d'encliquetage (134), en particulier de crochet d'encliquetage (134) accrochant par l'arrière un élément de coin (210).

15. Dispositif de fixation (1, 3) selon la revendication 13 ou 14, **caractérisé en ce que** le moyen de maintien (134) est formé sur une partie de maintien (131).

16. Dispositif de fixation (1, 3) selon l'une quelconque des revendications 13 à 15 et selon la revendication 9, **caractérisé en ce que** le moyen de maintien (134) est formé dans un prolongement d'une baguette (132) de la partie de maintien (131).
